Europäisches Patentamt

European Patent Office (11) Publication number: **0 321 013**

Office européen des brevets **A2**

(19)

(12) **EUROPEAN PATENT APPLICATION**

(21) Application number: 88202714.7

(51) Int. Cl.⁴: **G01B 7/28** , **G01B 7/12** , **G01N 27/24**

(22) Date of filing: 28.11.88

(30) Priority: 01.12.87 GB 8728063

(43) Date of publication of application:
21.06.89 Bulletin 89/25

(84) Designated Contracting States:
**DE FR GB NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Bakker, Hendricus Leo Maria**
**Badhuisweg 3**
**NL-1031 CM Amsterdam(NL)**
Inventor: **Hoff, Antonius Bernardus Maria**
**Badhuisweg 3**
**NL-1031 CM Amsterdam(NL)**

(74) Representative: **Aalbers, Onno et al**
**P.O. Box 302**
**NL-2501 CH The Hague(NL)**

(54) **A method and apparatus for internal corrosion-inspection of pipes or tubes of a relatively small diameter.**

(57) Capacitive internal inspection of heat exchanger tubes. The tube wall functions as one capacitor plate and a probe moving through the tube contains the other plate of a capacitor. The gap between both plates will vary depending on the condition of the tube-wall. As a consequence the capacitance will change, which change can be monitored.

EP 0 321 013 A2

## A METHOD AND APPARATUS FOR INTERNAL CORROSION-INSPECTION OF PIPES OR TUBES OF A RELATIVELY SMALL DIAMETER

The invention relates to a method and apparatus for internal corrosion inspection of pipes or tubes of relatively small diameter, such as, for example, used in heat exchangers, flow lines and the like.

The steel wall of such a tube or pipe may be subject to internal corrosion. This is dependent, obviously, on the matter that is transported through the tube or pipe. Both liquids and gases may attack the steel wall.

Two forms of corrosion may be of interest, namely uniform corrosion and pitting. In the case of uniform corrosion the wall thickness decreases more or less uniformly and it will be clear that this could lead to the tube becoming unserviceable, because the wall will become too weak to resist the internal pressure. Pitting could lead to leakage and this phenomenon must also be avoided.

It is obviously of great importance to be regularly informed about the state of the tube wall to be able to take measures in time.

Moreover, such tubes are often installed where access is difficult, so that methods of internal inspection are to be preferred.

At the moment several known techniques are available for the internal inspection of tubes. These known techniques for inspection are based on visual inspection, X-rays, ultrasonics, mechanical calipers, piglets and eddy currents. Since the principles of these techniques are known to those skilled in the art, they will not be explained in detail. However, their range of application is often limited. Visual inspection (for example endoscopy) will lead to inspection results that cannot be accurately quantified. X-rays can only be employed to assess the condition of the outer pipes in a heat exchanger, while the ultrasonic systems are too slow to inspect all the tubes in a practical way (5 to 6 tubes/hour). The disadvantage of using mechanical calipers to detect a general thinning of the wall is that only the first few centimetres of a tube are inspected. Inspection by means of a piglet gives an indication of the complete circumference of the pipes as a function of the distance along the tube. This indication can relate to a general thinning of the wall or to a localized pit, but it is impossible to discriminate between these two phenomena, let alone quantify the pit depths. The most commonly used method for inspection of a "complete pipe" (lengths in the order of 10 metres) is either the ultrasonic technique or the eddy current technique. With these techniques it is possible to localize the defects on the circumference and to size these, but the influence of a varying magnetic permeability of the material under investigation on the outcome of the eddy current tests can be considerable and a research programme is currently carried out to suppress these effects. The disadvantage of the ultrasonic systems, on the other hand, is that they are very sensitive to debris and fouling and, consequently, before operating the inspection system the tubes have to be thoroughly cleaned.

It is therefore an object of the invention to provide a technique for the internal inspection of relatively small diameter tubes or pipes, which is not sensitive to variations in the material properties and can be carried out at relatively high speeds.

It is another object of the invention to provide a technique for determining internal corrosion of a pipe or tube, which technique provides information as to the internal condition of the pipe or tube wall in a relatively simple and cheap way.

The invention therefore provides a method for internal inspection of pipes or tubes of relatively small diameter characterized by the steps of moving a probe through the tube to be inspected; measuring the capacitance between a first means located on the probe and the tube wall functioning as a second means; monitoring signals representing changes in capacitance which will result from a varying gap between the said first and second means, and deriving from the signals thus obtained information concerning the internal condition of the tube or pipe.

The invention also provides an apparatus for internal inspection of pipes or tubes of a relatively small diameter characterized by a probe system adapted to be moved through the tube to be inspected; means for measuring the capacitance between a first means mounted on the probe and the tube wall functioning as a second means, means for monitoring signals representing a change of capacitance between the said tube wall and the said means on the probe, and means for deriving information concerning the internal condition of the tube wall from the signals thus obtained.

Advantageously the said first and second means are capacitor plates.

The principle of the invention is based on a capacitive technique. The tube wall itself will function as a first capacitive means and the probe should contain one or more second capacitive means. When the probe is moved through the (heat exchanger) tube the gap between the first and second capacitive means will vary depending on the condition of the tube wall. As a consequence the capacitance between the said first and second means will change, which change can be monitored in any suitable manner.

The invention will now be described by way of example in more detail by reference to the accompanying drawings, in which:

fig. 1 represents a sectional view of a capacitive internal diameter probe according to the invention;

fig. 2 represents a block diagram of the detection electronics of the apparatus of the invention, required to measure and record the capacitance changes;

figs. 3 and 4 represent results of experiments carried out with an advantageous embodiment of the present invention; and

fig. 5 represents results of measurements with another advantageous embodiment of the invention.

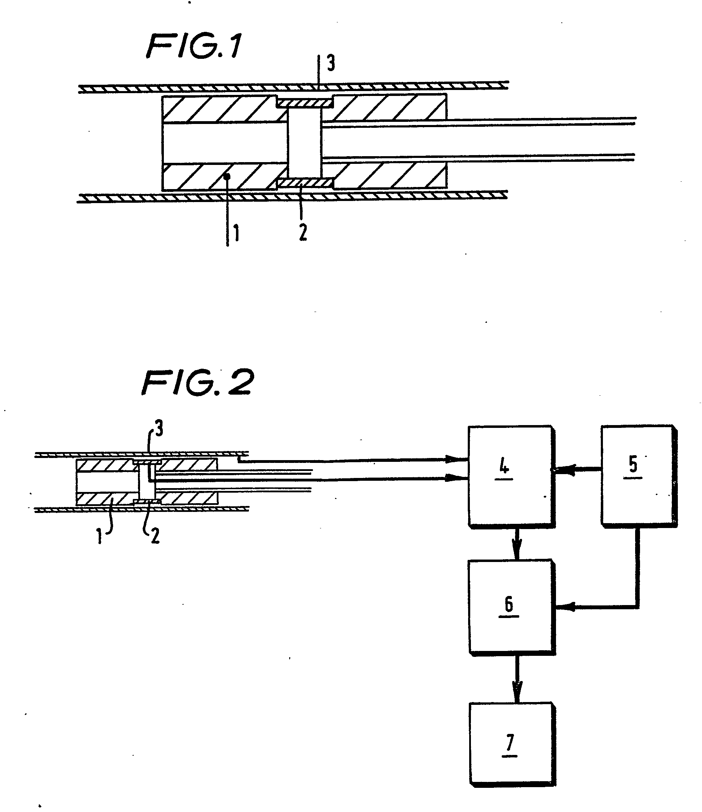

Referring now to fig. 1 a capacitive internal diameter probe system has been represented. The probe system comprises a probe body 1 which in any suitable manner is provided with a first capacitive means 2. The probe body 1 fits close into a pipe or tube to be inspected. The tube wall which functions as a second capacitive means has been represented by the reference numeral 3.

The capacitive means are connected in any way suitable for the purpose to a detection system which in fig. 1 has not been shown for reasons of clarity and will be described in more detail in fig. 2.

In this embodiment of the invention the first capacitive means is a cylindrical capacitor plate; the probe body 1 can for example be machined out of teflon and may have a length of about 50 mm and a diameter of about 19.5 mm.

The first capacitor plate can be made out of copper and may be 18.5 mm in diameter with a length of 10 mm. The average internal diameter of the tube is for example 20 mm.

Referring now to fig. 2, the first capacitor plate 2 is connected in any suitable manner (for example a coaxial cable) to one of the terminals of a capacitance bridge 4. The other terminal thereof is connected, also, for example, via a coaxial cable, to the tube wall 3. The capacitance bridge 4 is used to compensate for the equilibrium capacitance of the probe system in the tube. As the probe moves through the tube the capacitance changes are measured in any suitable manner, for example using a phase sensitive detection technique using an oscillator 5 and a lock-in amplifier 6. Finally, these capacitance changes are displayed in any way suitable for the purpose for example on a chart recorder 7.

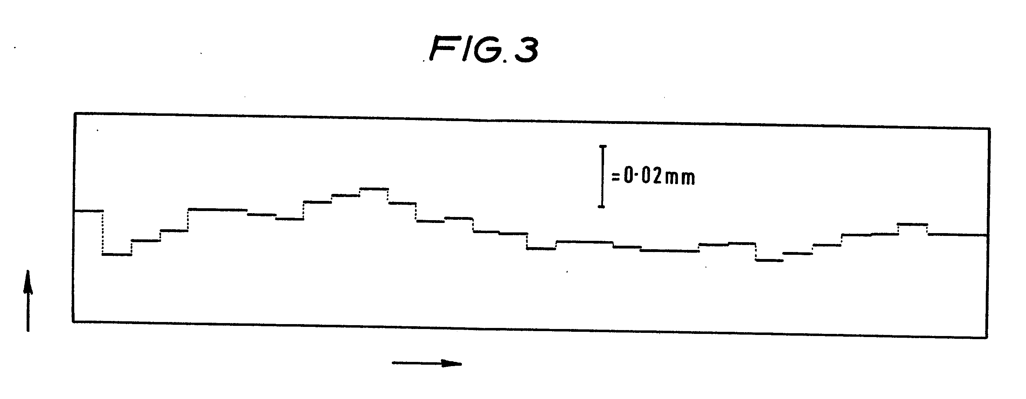

Fig. 3 represents the variation of the internal tube diameter (vertical axis) as a function of the distance along the tube (horizontal axis). The actual length covered in the experiments was 32 cm and the length of the tubes was 36 cm. The results are for an undamaged - as-received - tube measured with the embodiment of figs. 1 and 2. These measurements have been obtained in a step-wise manner.

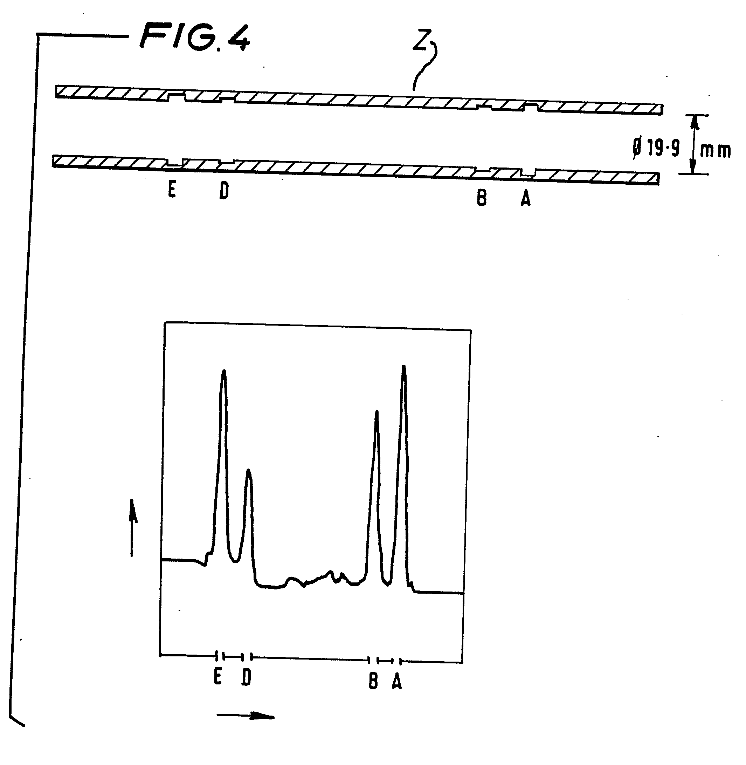

Fig. 4 (below) represents the variation of the internal diameter (vertical axis) as a function of the distance (horizontal axis) along a tube Z (fig. 4 (top)) containing slots with various depths, at the locations A to E, measured with the embodiment of figs. 1 and 2.

| LOCATION | WIDTH (mm) | ACTUAL DEPTH (mm) | MEASURED DEPTH (mm) |
|---|---|---|---|
| A | 10 | 1.9 | 1.7 |
| B | 10 | 0.9 | 0.9 |
| D | 10 | 0.4 | 0.4 |
| E | 10 | 1.5 | 1.4 |

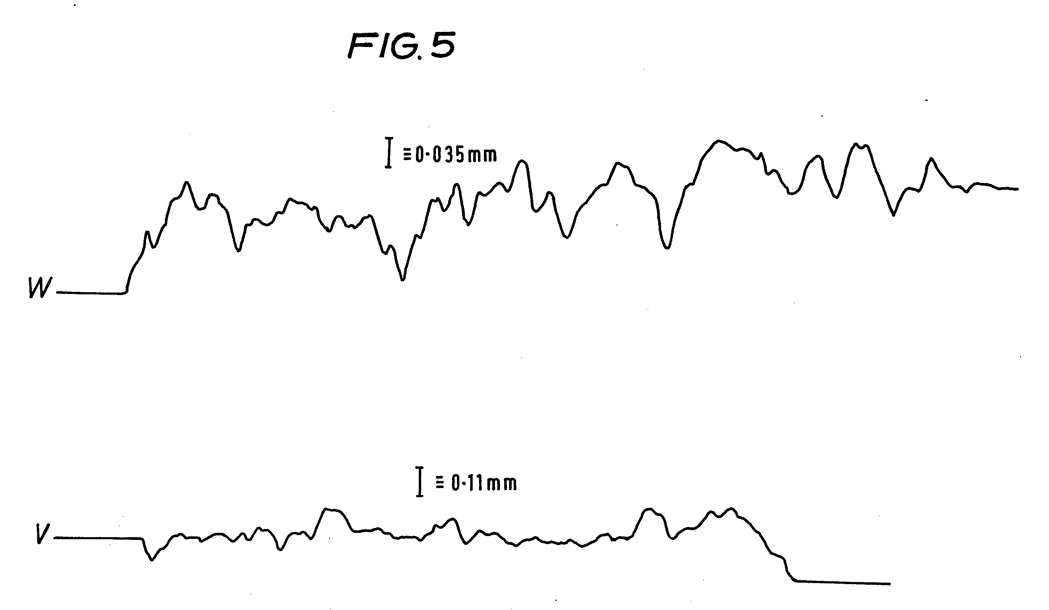

Fig. 5 represents the results of measurements with another advantageous embodiment of the invention on a naturally corroded tube. Due to excentricity of the probe system in the pipe under inspection the sensitivity is different for the top and bottom plates (V and W respectively). The capacitance measurements were not hindered by the presence of debris.

In this embodiment of the invention the first (cylindrical) capacitor plate in the probe has been replaced by a plurality of plates (for example 6) equally divided around the circumference of the probe.

Further, in this advantageous embodiment the capacitor plates can be surrounded by a plurality (for example 2) (cylindrical) guard rings parallel to the said capacitor plates to obtain a better defined capacitance. The diameter of the probe can be reduced to about 18.0 mm in order to be able to travel through highly corroded test tubes.

The probe body can be provided with springs to provide a better alignment of the probe body in the tubes. In the detection electronics a switching circuit was required to connect the (six) capacitor plates to the capacitance bridge sequentially and simultaneously connecting the other plates to the guarding potential.

It will be appreciated that the first capacitive means of the apparatus of the invention can have any suitable shape and is not necessarily cylindrical.

Various modifications of the present invention will become apparent to those skilled in the art from the foregoing description. Such modifications are intended to fall within the scope of the appended claims.

## Claims

1. A method for internal inspection of pipes or tubes of relatively small diameter characterized by the steps of moving a probe through the tube to be inspected; measuring the capacitance between a first means located on the probe and the tube wall functioning as a second means; monitoring signals representing changes in capacitance which will result from a varying gap between the said first and second means, and deriving from the signals thus obtained information concerning the internal condition of the tube or pipe.

2. An apparatus for internal inspection of pipes or tubes of a relatively small diameter characterized by a probe system adapted to be moved through the tube to be inspected; means for measuring the capacitance between a first means mounted on the probe and the tube wall functioning as a second means, means for monitoring signals representing a change of capacitance between the said tube wall and the said means on the probe, and means for deriving information concerning the internal condition of the tube wall from the signals thus obtained.

3. The apparatus as claimed in claim 1 characterized in that the probe comprises one first capacitor plate.

4. The apparatus as claimed in claims 2 or 3 characterized in that the first capacitor plate is cylindrical.

5. The apparatus as claimed in any one of claims 2-4 characterized in that the first capacitor plate is electrically connected to one of the terminals of a capacitance bridge, the other terminal of which being connected to the tube wall.

6. The apparatus as claimed in any one of claims 2-5 characterized in that the signals representing the change in capacitance are detected by a phase sensitive technique.

7. The apparatus as claimed in claims 2, 3, 5 or 6 characterized in that the first capacitor plate mounted on the probe consists of a plurality of plates.

8. The apparatus as claimed in claim 7 characterized in that the first capacitor plate consists of 6 plates equally divided around the circumference of the probe.

9. The apparatus as claimed in claim 8 characterized in that the plates are surrounded by two cylindrical guard rings parallel to the six capacitor plates.

10. The apparatus as claimed in claims 8 or 9 characterized in that the probe body is provided with springs.

## FIG.1

## FIG.2

# FIG.3

=0.02mm

EP 0 321 013 A2

# FIG.4

Z

Ø 19·9 mm

E    D                    B    A

E    D          B   A

FIG. 5

EP 0 321 013 A2